# EUROPÄISCHE PATENTSCHRIFT

(11) **EP 3 322 374 B1**
(45) Veröffentlichungstag und Bekanntmachung des Hinweises auf die Patenterteilung: **13.11.2019**
(21) Anmeldenummer: 16738784.4
(22) Anmeldetag: 14.07.2016
(51) Int. Cl.: A61C 8/00, A61C 13/34

(54) **POSITIONSAUFNAHMEVORRICHTUNG FÜR ZAHNIMPLANTATE**
POSITION SENSOR DEVICE FOR TOOTH IMPLANTS
DISPOSITIF D'ENREGISTREMENT DE POSITION POUR IMPLANTS DENTAIRES

(30) Priorität: 15.07.2015 DE 102015111482
(43) Veröffentlichungstag der Anmeldung: 23.05.2018
(73) Patentinhaber: nt-trading GmbH & Co. KG, 76187 Karlsruhe (DE)
(72) Erfinder: JAHN, Dirk, 76835 Weyher (DE)
(74) Vertreter: Witte, Weller & Partner Patentanwälte mbB
(86) Internationale Anmeldenummer: PCT/EP2016/066723
(87) Internationale Veröffentlichungsnummer: WO 2017/009407

(56) Entgegenhaltungen:
- EP-A1- 2 489 328
- DE-A1- 4 115 335
- ES-A1- 2 529 606
- US-A- 5 055 047
- US-A- 5 997 299

## Beschreibung

Die vorliegende Erfindung betrifft eine Positionsaufnahmevorrichtung für Zahnimplantate in einem Patientenmund, sowie eine Trägereinheit für eine Positionsaufnahmevorrichtung.

Bei der Herstellung von Zahnersatz wird üblicherweise ein Modell des zu versorgenden Unterkiefers und/oder Oberkiefers des Patienten angefertigt. In diesem Modell werden beispielsweise sogenannte Zahnimplantat-Analoge eingesetzt, die die im Kieferknochen verankerten Zahnimplantate des Patienten simulieren sollen. Für einen gut passenden Zahnersatz ist es von großer Bedeutung, dass die Zahnimplantat-Analoge insbesondere in ihrer Winkelausrichtung und ihrer Ausrichtung zu weiteren Zahnimplantat-Analogen exakt mit der Situation im Patientenmund übereinstimmen. Um dies zu überprüfen, werden Positionsaufnahmevorrichtungen eingesetzt, die die Ausrichtung der Zahnimplantate im Patientenmund erfassen und einen Vergleich mit dem Modell ermöglichen können. EP 2 489 328 A1 offenbart bspw. eine Vorrichtung für Zahnimplantate in einem Patientenmund.

Beim Einsatz solcher Positionsaufnahmevorrichtungen ist ein einfaches Handling von großer Bedeutung. Die Aufgabe der vorliegenden Erfindung besteht deshalb darin, eine Positionsaufnahmevorrichtung zu schaffen, die für den Zahnarzt einfach zu handhaben ist, insbesondere auch unter den beengten Platzverhältnissen in einem Patientenmund.

Die Aufgabe der Erfindung wird gelöst durch eine Positionsaufnahmevorrichtung für Zahnimplantate mit mehreren Positionsaufnahmeeinheiten, die jeweils einen länglichen Transferpfosten mit einem Schaft, einer Zahnimplantat-Schnittstelle und einer Bohrung zur Aufnahme einer Zahnimplantat-Schraube aufweisen, einer Trägereinheit zur Verbindung der mehreren Positionsaufnahmeeinheiten miteinander, um deren Position zueinander zu fixieren, wobei die Trägereinheit zumindest ein Trägerelement und zumindest zwei Fixierelemente aufweist und jedes Fixierelement ein Befestigungselement zur schwenkbaren und feststellbaren Anbringung am Trägerelement und ein Schaft-Aufnahmeelement zur lösbaren Befestigung am Schaft des Transferpfostens aufweist, wobei das Schaft-Aufnahmeelement und das Befestigungselement drehbar miteinander verbunden sind und der Abstand der Schaftaufnahmeelemente zueinander einstellbar ist.

Mithilfe dieser Positionsaufnahmevorrichtung ist es für den Zahnarzt einfach möglich, die Position der im Kieferknochen eingebrachten Zahnimplantate aufzunehmen. Hierfür werden die Transferpfosten in die Zahnimplantate mithilfe einer Zahnimplantatschraube befestigt. Anschließend wird die Trägereinheit eingebracht und fixiert. Die Trägereinheit verbindet zwei benachbarte Transferpfosten. Das Einbringen ist für den Zahnarzt sehr einfach, da lediglich die beiden Schaft-Aufnahmeelemente auf die Transferpfosten aufzuschieben bzw. aufzustecken sind. Dieser Vorgang wird mit weiteren benachbarten Zahnimplantaten wiederholt, so dass jeweils eine Trägereinheit zwei benachbarte Zahnimplantate verbindet.

Am Ende, wenn alle benötigten Trägereinheiten an den Transferpfosten befestigt sind, kann diese gesamte Einheit aus Trägereinheiten und Positionsaufnahmeeinheiten aus dem Patientenmund entfernt werden. Die Trägereinheiten sorgen nun dafür, dass die Positionierung der Transferpfosten zueinander exakt gleich bleibt, so dass eine Überprüfung mit der Position der Zahnimplantat-Analoge möglich ist.

Bei einer bevorzugten Weiterbildung ist der Transferpfosten zweiteilig ausgebildet, wobei das erste Teil die Zahnimplantat-Schnittstelle und die Bohrung zur Aufnahme der Zahnimplantat-Schraube aufweist, und das zweite Teil den Schaft aufweist, an dem das Schaft-Aufnahmeelement anbringbar ist. Bevorzugt sind das erste Teil und das zweite Teil über eine vordefinierte zweite Schnittstelle lösbar miteinander verbindbar. Weiter bevorzugt ist im Bereich der zweiten Schnittstelle eine Schraube vorgesehen, die eine lösbare Fixierung der beiden Teile ermöglicht.

Diese Maßnahmen haben den Vorteil, dass sowohl das Einbringen der Transferpfosten und Befestigen an den Zahnimplantaten wie auch das Herausnehmen der gesamten Positionsaufnahmevorrichtung deutlich vereinfacht ist.

Das Einbringen eines Transferpfostens erfolgt dabei in zwei Schritten, nämlich zunächst das Einbringen des ersten Teils, der über die Zahnimplantat-Schraube mit dem Zahnimplantat verbunden wird. Im zweiten Schritt wird das zweite Teil über die definierte zweite Schnittstelle, die vorzugsweise eine Indexierung erreicht, auf das erste Teil aufgesetzt und beispielsweise festgeklemmt.

Beim Herausnehmen der Positionsaufnahmevorrichtung wird beispielsweise die Klemmung zwischen erstem Teil und zweitem Teil gelöst, um die miteinander verbundenen zweiten Teile herauszunehmen. Anschließend werden die zurückgebliebenen ersten Teile durch Lösen der Zahnimplantat-Schrauben herausgenommen und wieder an den zugehörigen zweiten Teilen außerhalb des Patientenmunds befestigt.

Bei einer bevorzugten Weiterbildung ist das Schaft-Aufnahmeelement manschettenförmig bzw. schellenförmig ausgebildet und auf den Schaft aufschiebbar und festklemmbar.

Diese Lösung ist konstruktiv einfach ausführbar und ermöglicht nicht nur das einfache Verschieben des Schaft-Aufnahmeelements auf dem Schaft, sondern auch eine Rotation um die Längsachse des Schafts.

Bei einer bevorzugten Weiterbildung ist der Schaft hinsichtlich seiner Längserstreckung ausgebildet, um zumindest zwei Schaft-Aufnahmeelemente aufzunehmen.

Wie zuvor bereits erwähnt, werden über eine Trägereinheit jeweils zwei benachbarte Positionsaufnahmeeinheiten miteinander verbunden. Das bedeutet, dass bestimmte Transferpfosten zwei Schaft-Aufnahmeelemente zweier Trägereinheiten aufnehmen müssen, um eine Verbindung zu beiden benachbarten Positionsaufnahmeeinheiten zuzulassen.

Bei einer bevorzugten Weiterbildung weist das Trägerelement eine Stange auf und das Befestigungselement von zumindest einem Fixierelement ist manschettenförmig bzw. schellenförmig ausgebildet, um ein Verschieben entlang der Stange, ein Drehen bzw. Verschwenken vorzugsweise um eine Achse senkrecht zur Längsachse der Stange und ein Festklemmen an der Stange zu ermöglichen.

Es ist erforderlich, dass die Fixierelemente am Trägerelement in ihrem Abstand zueinander einstellbar sind. Hierfür sind entweder beide Fixierelemente verschiebbar am Trägerelement angebracht oder es ist nur ein Fixierelement verschiebbar und das andere Fixierelement fest am Trägerelement angebracht. In beiden Fällen lässt sich der Abstand der Fixierelemente zueinander verändern.

Bei einer bevorzugten Weiterbildung weist das erste Teil des Transferpfostens als zweite Schnittstelle einen Außensechskant-Abschnitt und das zweite Teil des Transferpfostens einen Innensechskant-Abschnitt als zweite Schnittstelle und die Schraube zur Fixierung der beiden Teile auf.

Diese Maßnahme hat sich als vorteilhaft herausgestellt, insbesondere weil sie eine Rotationssicherung der beiden Teile zueinander bereitstellt.

Bei einer bevorzugten Weiterbildung weist der Transferpfosten an seinem oberen, der Zahnimplantat-Schnittstelle gegenüberliegenden Ende einen Aufnahmebereich für einen Scankörper auf.

Diese Maßnahme hat den Vorteil, dass eine definierte Aufnahme vorhanden ist, die ein späteres optisches Abtasten der Ausrichtungen und der Positionen der Transferpfosten über das Einbringen von Scankörpern ermöglicht.

Bei einer bevorzugten Weiterbildung ist ein Fixierelement verschiebbar an dem Trägerelement angebracht und das weitere Fixierelement unverschiebbar am Trägerelement angebracht.

Die der Erfindung zugrundeliegende Aufgabe wird auch von einer Trägereinheit für eine Positionsaufnahmevorrichtung der vorgenannten Art zur Verbindung mehrerer Positionsaufnahmeeinheiten miteinander gelöst, die ein vorzugsweise stangenförmiges Trägerelement und zumindest zwei Fixierelemente aufweist, wobei jedes Fixierelement ein Befestigungselement zur schwenkbaren und feststellbaren Anbringung am Trägerelement und ein Schaft-Aufnahmeelement zur lösbaren Befestigung am Schaft des Transferpfostens aufweist, wobei das Schaft-Aufnahmeelement und das Befestigungselement drehbar miteinander verbunden sind.

Die Vorteile einer solchen Trägereinheit wurden zuvor bereits erläutert, wie auch die möglichen Weiterbildungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnung. Dabei zeigen:
- Fig. 1: eine Darstellung der verschiedenen Komponenten einer Positionsaufnahmevorrichtung;
- Fig. 2: eine Positionsaufnahmevorrichtung mit zwei Trägereinheiten zur Verbindung von insgesamt drei Transferpfosten;
- Fig. 3: eine Positionsaufnahmevorrichtung mit drei Trägereinheiten zur Verbindung von vier Transferpfosten;
- Fig. 4: eine Positionsaufnahmevorrichtung gemäß Fig. 3 aus einer anderen Perspektive;
- Fig. 5: eine Detailansicht des oberen Abschnitts einer Positionsaufnahmeeinheit mit aufgesetzten Trägereinheiten;
- Fig. 6: eine Positionsaufnahmevorrichtung mit einem eingebrachten Scankörper;
- Fig. 7: eine Detailansicht einer Trägereinheit;
- Fig. 8: eine weitere Darstellung einer Positionsaufnahmevorrichtung mit mehreren Komponenten;
- Fig. 9: eine Darstellung eines Modells mit Zahnimplantat-Analogen und eingebrachter Positionsaufnahmevorrichtung; und
- Fig. 10: eine Positionsaufnahmevorrichtung gemäß Fig. 9 aus einer anderen Perspektive.

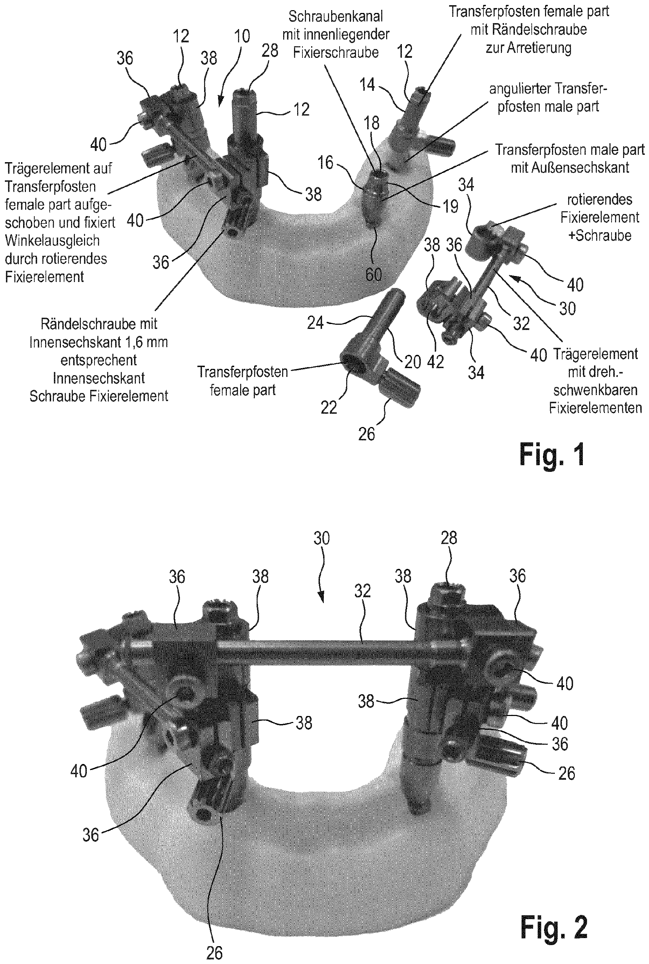

In Fig. 1 ist eine Positionsaufnahmevorrichtung dargestellt und mit dem Bezugszeichen 10 gekennzeichnet. Die Positionsaufnahmevorrichtung 10 weist mehrere Positionsaufnahmeeinheiten 12 auf, mit deren Hilfe sich die Position eines Zahnimplantats 60, das im Kiefer eines Patienten eingesetzt ist, aufnehmen lässt. Bei dem in Fig. 1 gezeigten Zahnimplantat 60 handelt es sich um ein Zahnimplantat-Analog, das in einem Modell eines Kiefers eingesetzt ist.

Jede der Positionsaufnahmeeinheiten 12 weist einen länglichen Transferpfosten 14 auf, der zweiteilig ausgebildet ist. Ein unteres Teil 16 weist eine Schnittstelle zu dem Zahnimplantat 60 auf und lässt sich über eine Zahnimplantatschraube am Zahnimplantat 60 in bekannter Weise befestigen. Das untere Teil 16 weist hierfür eine Bohrung 18 auf, in die die Zahnimplantatschraube eingebracht werden kann. Das untere Teil 16 kann gerade oder gewinkelt (anguliert) verlaufen.

Im oberen Abschnitt des unteren Teils 16 ist ein als Schnittstelle dienender Außensechskant 19 vorgesehen, der der indexierten Verbindung mit dem anderen oberen Teil 20 des Transferpfostens dient. Dieses obere Teil 20 weist an seinem unteren Ende einen als Schnittstelle dienenden Innensechskant 22 auf, der mit dem Außensechskant 19 des unteren Teils 16 zusammenwirkt. Das obere Teil 20 weist ferner einen zylinderförmigen Schaft 24 auf, der im Querschnitt rund ausgebildet ist und in Längsrichtung bevorzugt den gleichen Durchmesser besitzt.

Im Bereich des Innensechskants 22 ist eine Rändelschraube 26 vorgesehen, mit deren Hilfe das obere Teil 20 am unteren Teil 16 fixierbar ist, beispielsweise durch eine Klemmung.

Schließlich weist das obere Teil 20 an seinem oberen Ende einen beispielsweise als Sechskant ausgebildeten Aufnahmebereich 28 auf, der zur Befestigung eines Scankörpers dient.

Die Positionsaufnahmevorrichtung weist ferner eine Trägereinheit auf, die mit dem Bezugszeichen 30 gekennzeichnet ist. Diese Trägereinheit 30 dient grundsätzlich dazu, zwei benachbarte Positionsaufnahmeeinheiten 12 derart miteinander zu verbinden, dass die Position und Ausrichtung der miteinander verbundenen Transferpfosten der Positionsaufnahmeeinheit zueinander fixiert bleiben, so dass die Position und Ausrichtung im Mund eines Patienten auf ein Modell außerhalb des Patientenmundes übertragen werden kann.

Die Trägereinheit 30 umfasst hierfür ein vorzugsweise stangenförmiges Trägerelement 32 und zwei Fixierelemente 34.

Die beiden Fixierelemente 34 sind auf dem Trägerelement 32 derart angebracht, dass sich deren Abstand zueinander verändern lässt. Im vorliegenden Ausführungsbeispiel ist eines der Fixierelemente fest am Trägerelement angebracht und das andere Fixierelement 34 verschiebbar entlang des Trägerelements.

Das Fixierelement 34 ist zweiteilig aufgebaut und umfasst ein Befestigungselement 36 und ein Schaft-Aufnahmeelement 38. Beide Elemente 34, 36 sind bevorzugt drehbar um eine Achse senkrecht zur Längsachse des Trägerelements 32 miteinander verbunden.

Das Befestigungselement 34 ist bevorzugt manschettenförmig oder schellenförmig ausgebildet und umschließt das Trägerelement 32 in Umfangsrichtung nahezu vollständig. Um eine Fixierung des Befestigungselements 36 am Trägerelement 32 zu ermöglichen, ist eine Klemmschraube 40 vorgesehen, die den Durchmesser des manschettenförmigen Bereichs durch Eindrehen reduziert und damit zu einer Klemmung führt. Die genaue technische Ausgestaltung dieses Befestigungselements 36 ist in den Figuren deutlich zu erkennen.

In ähnlicher Weise ist auch das Schaft-Aufnahmeelement 38 ausgebildet und verfügt über einen manschettenförmigen bzw. schellenförmigen Abschnitt 42, der auf den Schaft 24 des Transferpfostens 14 aufsteckbar ausgebildet ist. Die zur Klemmung erforderliche Reduzierung des Durchmessers des manschettenförmigen Abschnitts erfolgt ebenfalls über die Klemmschraube 40.

Darüber hinaus dient die Klemmschraube 40 der drehbaren Verbindung von Befestigungselement und Schaft-Aufnahmeelement 36, 38.

Eine solche Trägereinheit 30 ermöglicht nun die Verbindung zweier benachbarter Positionsaufnahmeeinheiten 12, insbesondere der oberen Teile 20 der Transferpfosten 14. Hierfür werden die beiden Schaft-Aufnahmeelemente 38 einer Trägereinheit 30 von oben auf die Schäfte 24 der Transferpfosten aufgeschoben, wobei dies unabhängig von dem Abstand und der Ausrichtung der Transferpfosten möglich ist. Die drehbare Anordnung der Schaft-Aufnahmeelemente 38 an den Befestigungselementen 36, die Einstellbarkeit des Abstands der beiden Fixierelemente 34 zueinander wie auch die Drehbarkeit des Befestigungselements 36 auf dem Trägerelement 32 ermöglichen eine beliebige sehr flexible Einstellung. Zur Befestigung, das heißt Fixierung der Trägereinheit 30 an den Transferpfosten 12 sind nach dem Aufbringen lediglich die beiden Klemmschrauben 40 anzuziehen.

In Fig. 2 ist eine Positionsaufnahmevorrichtung 10 dargestellt, die mehrere Trägereinheiten 30 zur Verbindung mehrerer Positionsaufnahmeeinheiten 12 umfasst. Deutlich zu erkennen ist, dass auf den Schaft 24 eines Transferpfostens 12 zumindest zwei Schaft-Aufnahmeelemente 38 aufbringbar sind, so dass eine Verbindung zu zwei benachbarten Transferpfosten 12 möglich ist.

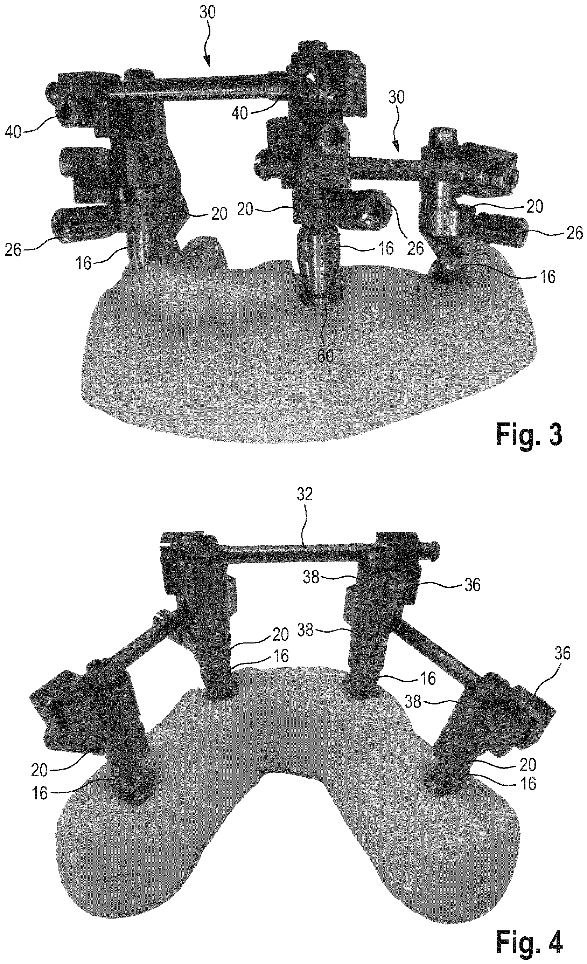

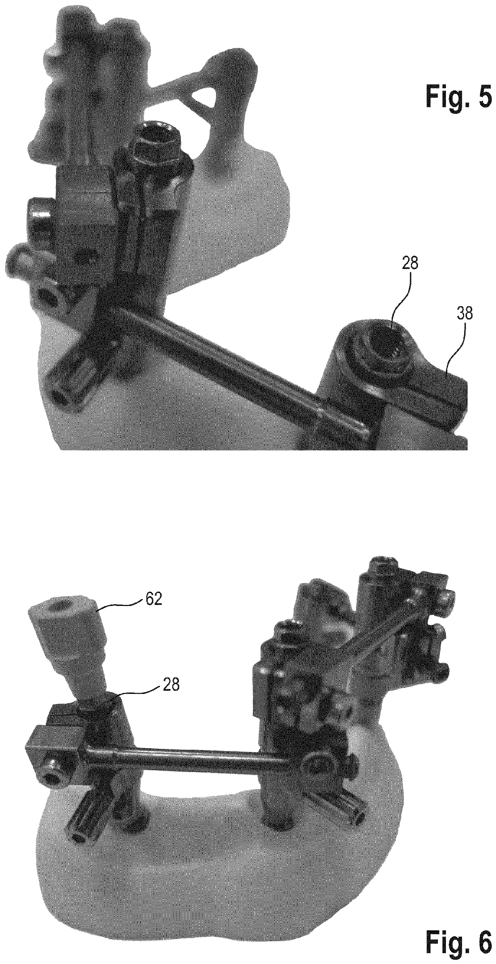

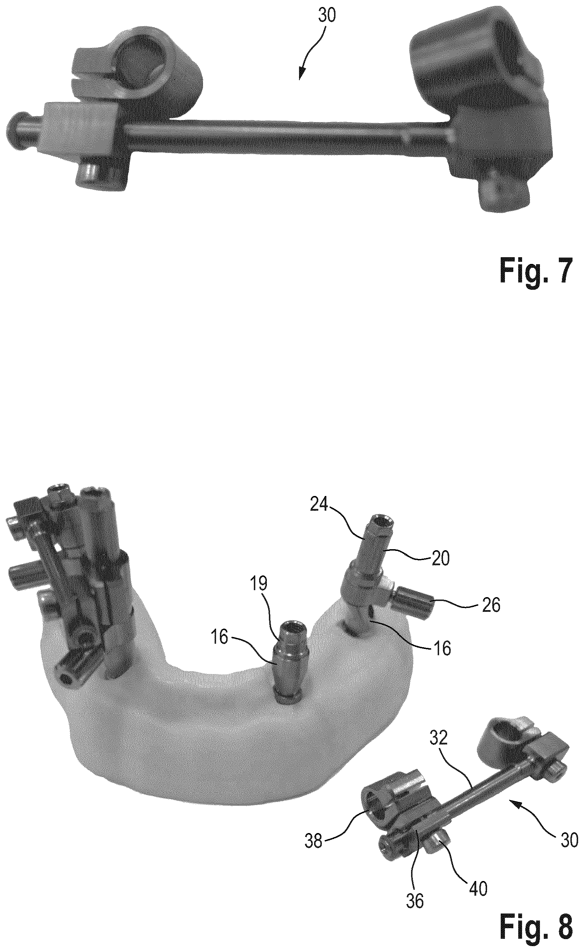

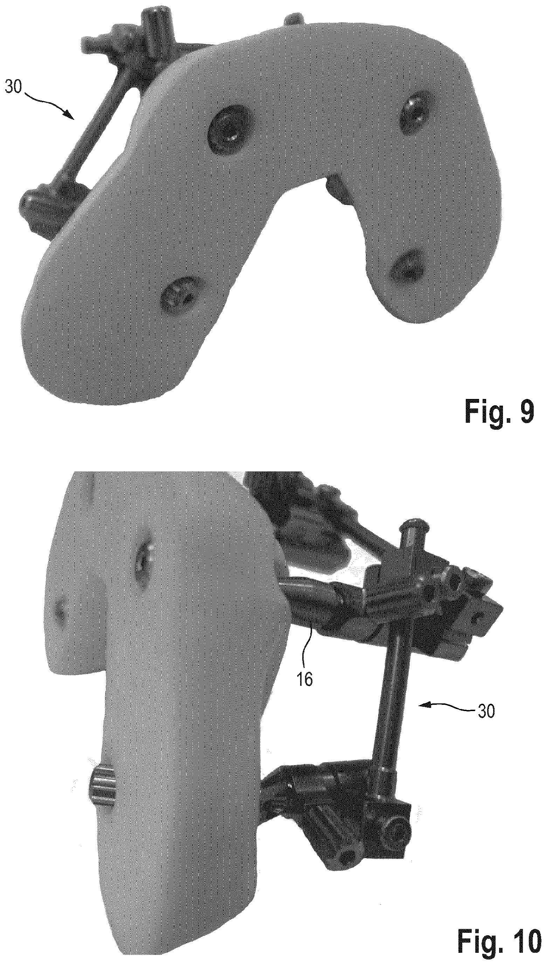

Die weiteren Figuren 3 bis 10 zeigen die zuvor beschriebene Positionsaufnahmevorrichtung 10 in unterschiedlichen Konstellationen und unterschiedlichen perspektivischen Darstellungen. Der Aufbau der Positionsaufnahmeeinheiten und der Trägereinheiten ist in den gezeigten Ausführungsbeispielen jedoch immer gleich, wobei für gleiche Teile auch die gleichen Bezugszeichen verwendet sind. In Fig. 6 ist noch ein Scankörper 62 dargestellt, der in den Aufnahmebereich 28 eines Transferpfostens 14 eingesetzt ist. Dieser Scankörper 62 dient der optischen Erfassung der Position und der Ausrichtung eins Transferpfostens außerhalb des Patientenmunds. So lässt sich eine 3D-Datei für die Herstellung einer Prothetik auf den Implantaten erstellen.

Zum Einbringen der Positionsaufnahmevorrichtung 10 werden vom Zahnarzt zunächst die unteren Teile 16 der Transferpfosten 14 in die Zahnimplantate 60 eingeschraubt.

Anschließend werden die oberen Teile 20 der Transferpfosten über die vorgegebenen Schnittstellen rotationssicher über eine Indexierung aufgesetzt und über die Rändelschrauben 26 befestigt.

Im nächsten Schritt werden die Trägereinheiten 30 eingesetzt, wobei die Schaft-Aufnahmeelemente 38 einer Trägereinheit 30 auf zwei benachbarte Schäfte 24 aufgeschoben werden. Anschließend wird die Trägereinheit 30 über die beiden Klemmschrauben 40 an den beiden Schäften 24 durch Klemmung fixiert. Dieser Schritt des Einsetzens einer Trägereinheit 30 wird für die weiteren Positionsaufnahmeeinheiten 12 wiederholt, solange bis alle Positionsaufnahmeeinheiten 12 miteinander verbunden sind und damit eine handhabbare Gesamt-Einheit geschaffen ist.

Zum Herausnehmen dieser Positionsaufnahmevorrichtung 10 löst der Zahnarzt die Rändelschrauben 26 aller Positionsaufnahmeeinheiten 12, so dass die miteinander verbundenen oberen Teile 20 aus dem Patientenmund herausgenommen werden können. Anschließend werden die unteren Teile 16 herausgenommen und wieder mit den zugehörigen oberen Teilen 20 verbunden, wobei die Ausrichtung (um die Längsachse) zueinander zuvor markiert wurde. Die Positionsaufnahmevorrichtung liefert dann die exakte Ausrichtung und Position der im Patientenmund vorhandenen Zahnimplantate, so dass eine Überprüfung oder Erstellung eines Modells damit möglich wird.

Weitere zuvor nicht beschriebene technische Merkmale ergeben sich aus den detaillierten Figuren, die die Positionsaufnahmevorrichtung 10 detailliert zeigen.

Neben der bereits erläuterten Kontrolle und Korrektur der Position von Implantat-Analogen eines Modells, ist es auch möglich, die Implantat-Analoge mit den Transferpfosten zu verschrauben. Nach dem Lösen der verbundenen Implantat-Analoge können diese in Abformpfosten einer Mundabformung zur Modellherstellung eingeschraubt werden. Dadurch werden die Abformpfosten im Abformmaterial korrigiert, so dass ein Modell mit ideal positionierten Implantat-Analogen entsteht.

## Patentansprüche

1. Positionsaufnahmevorrichtung für Zahnimplantate in einem Patientenmund, mit
mehreren Positionsaufnahmeeinheiten (12), die jeweils einen länglichen Transferpfosten (14) mit einem Schaft (24), einer Zahnimplantat-Schnittstelle und einer Bohrung (18) zur Aufnahme einer Zahnimplantat-Schraube aufweisen,
einer Trägereinheit (30) zur Verbindung der mehreren Positionsaufnahmeeinheiten (12) miteinander, um deren Position zueinander zu fixieren,
**dadurch gekennzeichnet, dass**
die Trägereinheit (30) zumindest ein Trägerelement (32) und zumindest zwei Fixierelemente (34) aufweist, und
jedes Fixierelement (34)
ein Befestigungselement (36) zur schwenkbaren und feststellbaren Anbringung am Trägerelement, und
ein Schaft-Aufnahmeelement (38) zur lösbaren Befestigung am Schaft (24) des Transferpfostens aufweist, wobei das Schaft-Aufnahmeelement und das Befestigungselement drehbar miteinander verbunden sind und der Abstand der Schaft-Aufnahmeelemente zueinander einstellbar ist.

2. Positionsaufnahmevorrichtung nach Anspruch 1, **dadurch gekennzeichnet, dass** der Transferpfosten (14) zweiteilig (16, 20) ausgebildet ist, wobei das erste Teil (16) die Zahnimplantat-Schnittstelle und die Bohrung (18) zur Aufnahme der Zahnimplantat-Schraube aufweist und das zweite Teil (20) den Schaft (24) aufweist, an dem das Schaft-Aufnahmeelement anbringbar ist.

3. Positionsaufnahmevorrichtung nach Anspruch 2, **dadurch gekennzeichnet, dass** das erste Teil und das zweite Teil über eine vordefinierte zweite Schnittstelle (19) lösbar miteinander verbindbar sind.

4. Positionsaufnahmevorrichtung nach Anspruch 3, **dadurch gekennzeichnet, dass** im Bereich der zweiten Schnittstelle eine Schraube (26) vorgesehen ist, die eine lösbare Fixierung der beiden Teile ermöglicht.

5. Positionsaufnahmevorrichtung nach einem der vorhergehenden Ansprüche, **dadurch gekennzeichnet, dass** das Schaft-Aufnahmeelement (38) manschettenförmig oder schellenförmig ausgebildet ist und auf den Schaft (24) aufschiebbar und festklemmbar ist.

6. Positionsaufnahmevorrichtung nach einem der vorhergehenden Ansprüche, **dadurch gekennzeichnet, dass** der Schaft (24) hinsichtlich seiner Längserstreckung ausgebildet ist, um zumindest zwei Schaft-Aufnahmeelemente (38) aufzunehmen.

7. Positionsaufnahmevorrichtung nach einem der vorhergehenden Ansprüche, **dadurch gekennzeichnet, dass** das Trägerelement (32) eine Stange aufweist, und das Befestigungselement (36) von zumindest einem Fixierelement (34) manschettenförmig oder schellenförmig ausgebildet ist, um ein Verschieben entlang Stange, ein Drehen bzw. Verschwenken vorzugsweise um eine Achse senkrecht zur Längsachse der Stange und ein Festklemmen an der Stange zu ermöglichen.

8. Positionsaufnahmevorrichtung nach Anspruch 4, **dadurch gekennzeichnet, dass** das erste Teil des Transferpfostens als zweite Schnittstelle (19) einen Außensechskant-Abschnitt (19) und das zweite Teil des Transferpfostens einen Innensechskant-Abschnitt (22) als zweite Schnittstelle und die Schraube(26) zur Fixierung der beiden Teile aufweist.

9. Positionsaufnahmevorrichtung nach einem der vorhergehenden Ansprüche, **dadurch gekennzeichnet, dass** der Transferpfosten (14) an seinem oberen, der Zahnimplantat-Schnittstelle gegenüberliegenden Ende einen Aufnahmebereich (28) für einen Scankörper aufweist.

10. Positionsaufnahmevorrichtung nach einem der vorhergehenden Ansprüche, **dadurch gekennzeichnet, dass** ein Fixierelement (34) verschiebbar an dem Trägerelement (32) angebracht ist und das weitere Fixierelement unverschiebbar am Trägerelement angebracht ist.

11. Trägereinheit für eine Positionsaufnahmevorrichtung nach einem der Ansprüche 1 bis 9 zur Verbindung mehrerer Positionsaufnahmeeinheiten miteinander, um deren Position zueinander zu fixieren, mit
einem vorzugsweise stangenförmiges Trägerelement (32) und zumindest zwei Fixierelementen (34), wobei jedes Fixierelement (34) ein Befestigungselement (36) zur schwenkbaren und feststellbaren Anbringung am Trägerelement, und
ein Schaft-Aufnahmeelement (38) zur lösbaren Befestigung am Schaft des Transferpfostens (14) aufweist, wobei das Schaft-Aufnahmeelement (38) und das Befestigungselement (36) drehbar miteinander verbunden sind.

## Claims

1. A position capturing device for tooth implants in the mouth of a patient, having
multiple position capturing units (12) which each comprise an elongated transfer post (14) with a shank (24), a tooth implant interface and a bore (18) for receiving a tooth implant screw,
a carrier unit (30) for interconnecting the multiple position capturing units (12) in order to fix the position thereof with respect to one another,
**characterized in that**
the carrier unit (30) comprises at least one carrier element (32) and at least two fixing elements (34), and
each fixing element (34) comprises
a fastening element (36) for the pivotable and lockable attachment on the carrier element, and
a shank-receiving element (38) for the releasable fastening on the shank (24) of the transfer post, wherein the shank receiving element and the fastening element are connected together so as to be rotatable and the distance between the shank-receiving elements with respect to one another is adjustable.

2. The position capturing device as claimed in claim 1, **characterized in that** the transfer post (14) is realized in two parts (16, 20), wherein the first part (16) comprises the tooth implant interface and the bore (18) for receiving the tooth implant screw and the second part (20) comprises the shank (24), to which the shank-receiving element is attachable.

3. The position capturing device as claimed in claim 2, **characterized in that** the first part and the second part are connectable together in a releasable manner via a predefined second interface (19).

4. The position capturing device as claimed in claim 3, **characterized in that** a screw (26) which makes releasable fixing of the two parts possible, is provided in the region of the second interface.

5. The position capturing device as claimed in any of the preceding claims, **characterized in that** the shank-receiving element (38) is realized in the shape of a sleeve or clip and is fittable and clampable on the shank (24).

6. The position capturing device as claimed in any of the preceding claims, **characterized in that**, with regard to its longitudinal extension, the shank (24) is realized in order to receive at least two shank-receiving elements .

7. The position capturing device as claimed in any of the preceding claims, **characterized in that** the carrier element (32) comprises a rod, and the fastening element (36) of at least one fixing element (34) is realized in the form of a sleeve or clip in order to enable displacement along the rod, rotating or pivoting preferably about an axis perpendicular to the longitudinal axis of the rod and clamping on the rod.

8. The position capturing device as claimed in claim 4, **characterized in that** the first part of the transfer post comprises an external hexagon portion (19) as second interface (19) and the second part of the transfer post comprises an internal hexagon portion (22) as second interface and the screw (26) for fixing the two parts.

9. The position capturing device as claimed in any of the preceding claims, **characterized in that** the transfer post (14) comprises a receiving region (28) for a scan body on its upper end located opposite the tooth implant interface.

10. The position capturing device as claimed in any of the preceding claims, **characterized in that** one fixing element (34) is attached on the carrier element (34) so as to be displaceable and the further fixing element is attached on the carrier element so as to be non-displaceable.

11. A position capturing unit for a position capturing device as defined in any of claims 1 to 9 for interconnecting multiple position capturing units as to fix their position relative to each other, comprising
at least one preferably rod-shaped carrier element (32) and
at least two fixing elements (34),
each fixing element (34) comprising a fastening element (36) for the pivotable and lockable attachment on the carrier element and a shank-receiving element (38) for the releasable fastening on the shank of the transfer post (14), wherein the shank receiving element (38) and the fastening element (36) are connected together so as to be rotatable.

## Revendications

1. Dispositif d'enregistrement de position pour des implants dentaires dans la bouche d'un patient, comprenant
plusieurs unités d'enregistrement de position (12) qui présentent chacune un pilier de transfert allongé (14) avec une tige (24), une interface d'implant dentaire et un alésage (18) pour recevoir une vis d'implant dentaire,
une unité de support (30) pour la connexion de la pluralité d'unités d'enregistrement de position (12) les unes aux autres, afin de fixer leur position les unes par rapport aux autres,
**caractérisé en ce que**
l'unité de support (30) présente au moins un élément de support (32) et au moins deux éléments de fixation (34), et
chaque élément de fixation (34) présente
un élément d'attache (36) pour le montage sur l'élément de support, de manière pivotante et immobilisable, et
un élément de réception de tige (38) pour l'attache amovible à la tige (24) du pilier de transfert, l'élément de réception de tige et l'élément d'attache étant connectés l'un à l'autre de manière rotative et la distance entre les éléments de réception de tige pouvant être ajustée.

2. Dispositif d'enregistrement de position selon la revendication 1, **caractérisé en ce que** le pilier de transfert (14) est réalisé en deux parties (16, 20), la première partie (16) présentant l'interface d'implant dentaire et l'alésage (18) pour recevoir la vis d'implant dentaire et la deuxième partie (20) présentant la tige (24) sur laquelle peut être monté l'élément de réception de tige.

3. Dispositif d'enregistrement de position selon la revendication 2, **caractérisé en ce que** la première partie et la deuxième partie peuvent être connectées de manière amovible l'une à l'autre par le biais d'une deuxième interface prédéfinie (19).

4. Dispositif d'enregistrement de position selon la revendication 3, **caractérisé en ce que** dans la région de la deuxième interface est prévue une vis (26) qui permet une fixation amovible des deux parties.

5. Dispositif d'enregistrement de position selon l'une quelconque des revendications précédentes, **caractérisé en ce que** l'élément de réception de tige (38) est réalisé en forme de manchette ou en forme de collier de serrage et peut être enfoncé et serré fixement sur la tige (24).

6. Dispositif d'enregistrement de position selon l'une quelconque des revendications précédentes, **caractérisé en ce que** la tige (24) est réalisée, en termes de son étendue longitudinale, de manière à recevoir au moins deux éléments de réception de tige (38).

7. Dispositif d'enregistrement de position selon l'une quelconque des revendications précédentes, **caractérisé en ce que** l'élément de support (32) présente une barre et l'élément d'attache (36) est formé par au moins un élément de fixation (34) en forme de manchette ou en forme de collier de serrage afin de permettre un coulissement le long de la barre, une rotation ou un pivotement de préférence autour d'un axe perpendiculairement à l'axe longitudinal de la barre et un serrage fixe sur la barre.

8. Dispositif d'enregistrement de position selon la revendication 4, **caractérisé en ce que** la première partie du pilier de transfert, en tant que deuxième interface (19), présente une portion extérieure à six pans (19) et la deuxième partie du pilier de transfert présente une portion intérieure à six pans (22) en tant que deuxième interface, et la vis (26) pour la fixation des deux parties.

9. Dispositif d'enregistrement de position selon l'une quelconque des revendications précédentes, **caractérisé en ce que** le pilier de transfert (14) présente, au niveau de son extrémité supérieure opposée à l'interface d'implant dentaire, une région de réception (28) pour un corps de balayage.

10. Dispositif d'enregistrement de position selon l'une quelconque des revendications précédentes, **caractérisé en ce qu'**un élément de fixation (34) est monté de manière à pouvoir coulisser sur l'élément de support (32) et l'élément de fixation supplémentaire est monté de manière non coulissante sur l'élément de support.

11. Unité de support pour un dispositif d'enregistrement de position selon l'une quelconque des revendications 1 à 9, pour la connexion de plusieurs unités d'enregistrement de position les unes aux autres, afin de fixer leur position les unes par rapport aux autres, comprenant
un élément de support (32) de préférence en forme de barre et au moins deux éléments de fixation (34), chaque élément de fixation (34) présentant
un élément d'attache (36) pour le montage sur l'élément de support, de manière pivotante et immobilisable, et
un élément de réception de tige (38) pour l'attache amovible à la tige du pilier de transfert (14), l'élément de réception de tige (38) et l'élément d'attache (36) étant connectés l'un à l'autre de manière rotative.
